# EUROPEAN PATENT APPLICATION

(11) **EP 4 606 214 A1**
(43) Date of publication of application: **27.08.2025**
(21) Application number: 24159004.1
(22) Date of filing: 22.02.2024
(51) Int. Cl.: A01G 31/04, A01G 31/06

(54) **CULTIVATION SYSTEM FOR CULTIVATING PLANTS, MOVEABLE CART AND CART STATION FOR SUCH SYSTEM**

(71) Applicant: Ecopromt AB, 432 77 Tvååker (SE)
(72) Inventor: DARKE, Wilhelm, 184 63 Åkersberga (SE); JÖNSSON, Ulf, 432 77 Tvååker (SE)
(74) Representative: Zacco Sweden AB

(57) **Abstract**

The present invention relates a cultivation system for cultivating plants, the cultivation system comprising: a cart station; and a moveable cart comprising a plurality of shelves for supporting trays with plants to be cultivated. The cart station comprises a lighting system, an irrigation system, a ventilation system, and a station spine. The station spine is extending in a vertical direction upwards from ground. The station spine supporting the lighting system, the irrigation system and the ventilation system. The lighting system, the irrigation system and the ventilation system are all configured to provide lighting, irrigation and ventilation to each of the shelves of the moveable cart. A cart station and a moveable cart are also presented.

## Description

### TECHNICAL FIELD

The present invention relates to cultivating of plants. Especially, a cultivation system for cultivating plants. The cultivation system comprising a moveable cart comprising a plurality of shelves for supporting trays with plants to be cultivated and cart station.

### BACKGROUND ART

Cultivation systems refer to the combination of various agricultural practices and technologies to optimize plant growth, increase productivity, and enhance resource efficiency. These systems often involve the integration of multiple components, such as irrigation, lighting and control of environmental conditions. Using carts in the context of cultivation systems involve mobile platforms or containers designed to facilitate the movement of plants within a cultivation space. The development of cultivation systems is an evolving field. Needs to be fulfilled in cultivation of plants are temperature, humidity, CO₂ levels, and irrigation. Hence, there is a need in improvements of irrigation and/or environmental conditions for the plants to be cultivated.

### SUMMARY OF THE INVENTION

The present invention is set out in the appended set of claims.

According to a first aspect a cart station of a cultivation system for cultivating plants is presented. The cart station being configured to host a moveable cart comprising a plurality of shelves for supporting trays with plants to be cultivated. The cart station comprises a lighting system; an irrigation system; a ventilation system; and a station spine. The station spine extends in a vertical direction upwards from ground upon the cart station being installed for use. The station spine supports the lighting system, the irrigation system and the ventilation system. The lighting system comprises a plurality of light frames, each light frame extends in a horizontal direction out from the station spine and supports light emitters. The plurality of light frames are arranged along the station spine to provide illumination for each of the plurality of shelves of a moveable cart upon the moveable cart being hosted by the cart station. The irrigation system comprises a plurality of irrigation nozzles. The plurality of irrigation nozzles are arranged along the station spine to provide irrigation for each of the plurality of shelves of a moveable cart upon the moveable cart being hosted by the cart station. The ventilation system comprises a plurality of air flow outlets. The plurality of air flow outlets are arranged along the station spine to provide an air flow for each of the plurality of shelves of a moveable cart upon the moveable cart being hosted by the cart station.

The cart station of the present invention may be utilized in vertical farming setups, where plants are cultivated in stacked layers. The cart station of the present invention provides for improvements of irrigation and environmental conditions for the plants to be cultivated. This since the lighting system, the irrigation system and the ventilation system are all configured to provide lighting, irrigation and ventilation, respectively, to each of the shelves of the moveable cart. The cart station of the present invention can support modular cultivation systems. This modularity allows for flexibility in arranging and rearranging plant configurations based on growth stage, plant type, or specific requirements. The cart station of the present invention incorporate automation to control parameters like irrigation, and environmental conditions. A level of automation can enhance precision and efficiency in plant cultivation.

The ventilation system may comprise a plurality of air flow arms. Each air flow arm may comprise a plurality of air flow openings forming air flow outlets. Each air flow arm may form part of a respective one of the light frames of the lighting system. Each air flow arm may extend in the horizontal direction out from the station spine. Distributing an air flow from air flow arms being part of the light frames facilitate an even flow of air at each level, i.e. shelf, of the moveable cart. Improvements in avoiding microclimates at each level will hence be possible. As a result, more even temperature, humidity and CO₂ levels may be achieved allowing for a better cultivation climate for the plants to be cultivated.

The station spine may be hollow forming a vertical cavity through the station spine. The vertical cavity may constitute a feeder channel of the ventilation system. By arranging the feeder channel of the ventilation within the station spine space may be saved. Further, individual distribution of air to the different levels, i.e. shelves, of the moveable cart may be provided for in an efficient manner.

The air flow outlets may comprise slits in the station spine.

Each air flow arm may be centrally arranged in each light frame. The air flow arm may, at an end portion thereof, be connected to the station spine.

Each irrigation nozzle may comprise a pressure valve configured to close upon a water pressure being below a threshold pressure.

The cart station may further comprise a cart sensor configured to sense whether a moveable cart is hosted at the cart station. Upon a moveable cart is hosted at the cart station lighting, irrigation and ventilation may be enabled.

Each irrigation nozzle may comprise a nozzle opening facing ground upon the cart station being installed for use. The irrigation nozzles may be extending out from the station spine in the horizontal direction such that a respective nozzle opening of the irrigation nozzles is extending over a respective shelf of a moveable cart upon the moveable cart being hosted by the cart station.

According to a second aspect a cultivation system for cultivating plants is provided. The cultivation system comprising a cart station according to the first aspect, and a moveable cart comprising a plurality of shelves for supporting trays with plants to be cultivated.

The above-mentioned features of the first aspect, when applicable, apply to this second aspect as well. In order to avoid undue repetition, reference is made to the above.

The moveable cart may further comprise four vertical corner posts supporting the plurality of shelves, and a base supporting the four vertical corner posts. At least one of the four vertical corner posts may be hollow forming a vertical cavity through the vertical corner post. The vertical cavity constituting an irrigation drain. Each of the plurality of shelves may comprise a drain opening connecting the respective shelf to the irrigation drain. The drain openings may be arranged at a bottom of the respective shelf. Each drain opening may have as a first width at a top portion thereof and a second width at a bottom portion thereof, wherein the second width is larger than the first width.

Two of the four vertical corner posts may be hollow forming a respective vertical cavity through the respective vertical corner post. The two vertical cavities constituting a pair of irrigation drains. Each of the plurality of shelves may comprise a pair of drain openings connecting the respective shelf to the pair of irrigation drains.

Each drain opening may have a triangular shape or an L-shape.

According to a third aspect a moveable cart of a cultivation system for cultivating plants s provided. The moveable cart comprises a plurality of shelves for supporting trays with plants to be cultivated; four vertical corner posts supporting the plurality of shelves; and a base supporting the four vertical corner posts. At least one of the four vertical corner posts is hollow forming a vertical cavity through the vertical corner post. The vertical cavity constituting an irrigation drain. Each of the plurality of shelves comprises a drain opening connecting the respective shelf to the irrigation drain. The drain openings are arranged at a bottom of the respective shelf. Each drain opening has a first width at a top portion thereof and a second width at a bottom portion thereof, wherein the second width is larger than the first width.

Two of the four vertical corner posts may be hollow forming a respective vertical cavity through the respective vertical corner post. The two vertical cavities constituting a pair of irrigation drains. Each of the plurality of shelves may comprise a pair of drain openings connecting the respective shelf to the pair of irrigation drains.

Each drain opening may have a triangular shape or an L-shape.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF THE DRAWINGS

The above and other aspects will now be described in more detail, with reference to appended figures. The figures should not be considered limiting; instead, they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 is a side view in perspective of a cultivation system.
Fig. 2 is a side view of the cultivation system as illustrated in Fig. 1.
Fig. 3 is a top view along the line A-A in Fig. 2.
Fig. 4 is a zoom in of the area B in Fig. 3
Fig. 5 is a zoom in of the area A in Fig. 3.
Figs 6a-c illustrates alternative shapes of drain openings in shelves of a moveable cart of the cultivation system.

### DETAILED DESCRIPTION

The present invention will now be described more fully hereinafter with reference to the accompanying drawings, in which currently preferred embodiments of the invention are shown. This invention may, however, be embodied in many different forms.

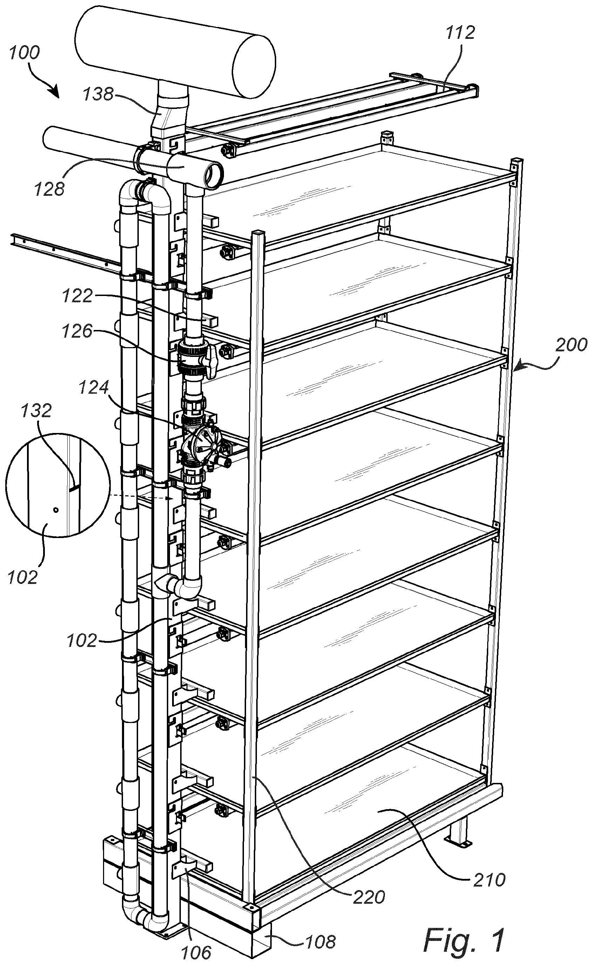

In connection with Figs 1-5 and Fig 6a-c, a cultivation system 10 for cultivating plants will be discussed. The cultivation system 10 comprises a cart station 100 and a moveable cart 200. It is further to be understood that the cultivation system 10 may comprise a plurality of cart stations 100 and moveable carts 200. However, for simplicity only one cart station 100 and one moveable cart 200 will be illustrated in the drawings.

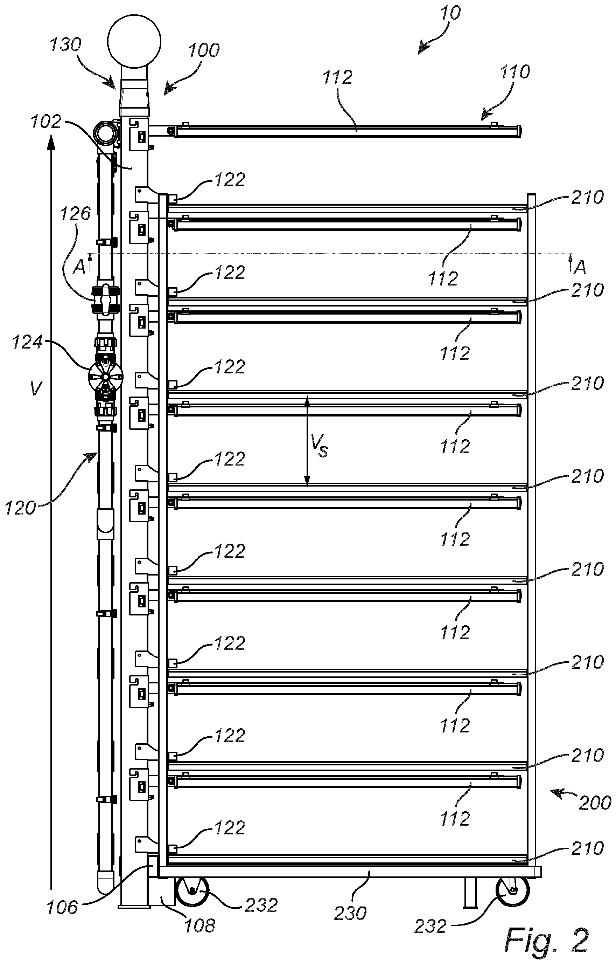

The cart station 100 is configured to host a moveable cart 200. Hence, a moveable cart 200 is configured to dock with the cart station 100. In Figs 1 and 2 the cultivation system 10 is illustrated in a situation upon the moveable cart 200 being hosted by the cart station 100, i.e. the moveable cart 200 has docked with the cart station 100. Upon a specific moveable cart 200 has been undocked from the cart station 100 another moveable cart 200 may instead dock with the cart station 100.

The moveable cart 200 comprises a plurality of shelves 210 for supporting trays with plants to be cultivated. In the in Figs 1 and 2 illustrated example the moveable cart 200 comprises eight such shelves 210, however, the moveable cart 200 may comprise any number of shelves 210 fitting with the cart station 100. The moveable cart 200 further comprises four vertical corner posts 220 supporting the plurality of shelves 210 and a base 230 supporting the four vertical corner posts 220. The base 230 may be provided with wheels 232 facilitating movement of the moveable cart 200. The base 230 may have a rectangular shape with two short sides and two long sides. The long sides may have a length being at least two times a length of the short sides. The four vertical corner posts 220 are preferably arranged at a respective corner of the base 230. The four vertical corner posts 220 are extending in a direction, V, vertically upwards from ground upon the moveable cart 200 being in use. Each shelf 210 of the moveable cart 200 may be seen as constituting a level of the moveable cart 200. The levels, i.e. the shelves 210, are separated by a vertical spacing, Vₛ. The vertical spacing, Vₛ, may be selected to fit with the plants to cultivate with the cultivation system 10. Further, the vertical spacing, Vₛ, is to be selected to fit with spacings between features of a lighting system 110, an irrigation system 120 and a ventilation system 130 of the cart station 100, the lighting system 110, the irrigation system 120 and the ventilation system 130 of the cart station 100 are discussed in more detail further below.

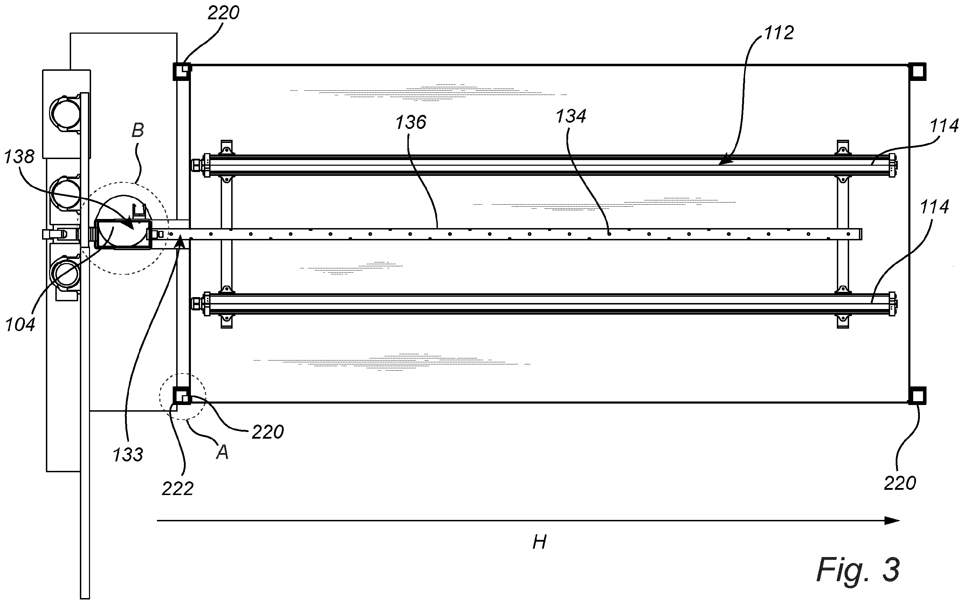

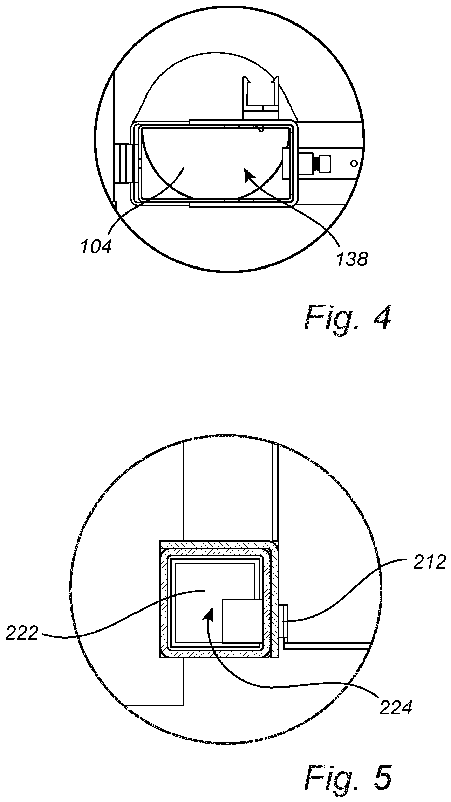

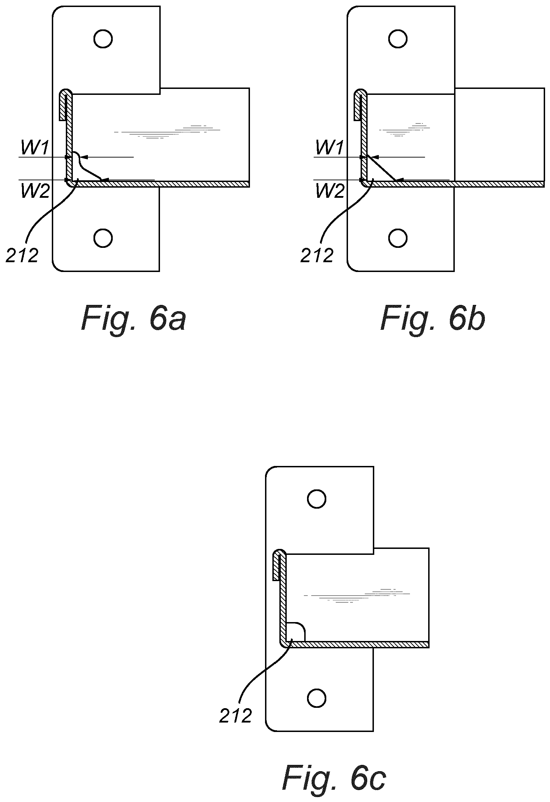

As best seen in Figs 3 and 5, at least one of the four vertical corner posts 220 may be hollow forming a vertical cavity 222 through the vertical corner post 220. Such a vertical cavity 222 may constitute an irrigation drain 224. Further, each of the plurality of shelves 210 may comprise a drain opening 212 connecting the respective shelf 210 to the irrigation drain 224. The drain openings 212 are arranged at a bottom of the respective shelf 210. Examples of shapes of the drain openings 212 are illustrated in connection with Figs 6a and 6b. As illustrated in Fig 6a, the drain opening 212 may have an L-shape. As illustrated in Fig 6b, the drain opening 212 may have a triangular. Each drain opening 212 has a first width w1 at a top portion thereof and a second width w2 at a bottom portion thereof. The second width w2 is larger than the first width w1. The second width w2 being approximately 1 cm, preferably in the range 8-10 mm. According to one specific embodiment the second width w2 is 9 mm. The first width w1 being in the range of 1-9 mm, preferably in the range 2-5 mm. By forming the drain openings 212 in this way clogging of the drain opening may be prevented at the same time as drain speed can be controlled. In a cultivation system a substrate for growing the plants comprises granular pieces. Such granular prices may clog drain openings. To reduce the risk of that happening, the drain openings should be as large as possible. A large drain opening however, increases the flow into the drain and wastes irrigation water and puts more stress on the irrigation system and drain/filtering system. By having a relatively wide opening near a bottom of the shelf and having a relatively high opening close to a lateral edge of the shelf there is less risk of substrate blocking the opening and larger substrate pieces can go through the drain opening without getting stuck and clogging the draining system. Hence, triangular or L-shape draining openings are preferred since such openings may allow substrate pieces can go through the drain opening without getting stuck and clogging the draining system and at the same time reduce the water flow through the drain opening and, hence, waste less water.

As an alternative to the triangular or L-shaped drain openings, the drain opening 212 may have a general rectangular shape with an upper rounded corner. This alternative embodiment of a drain opening is illustrated in Fig. 6c.

It is further to be understood that two (or more) of the four vertical corner posts 220 may be hollow forming a respective vertical cavity 222 through the respective vertical corner post 220. According to one specific embodiment vertical cavities 222 through two of the vertical corner posts 220 constitute a pair of irrigation drains 224. Specifically, the two vertical corner posts 220 constituting the pair of irrigation drains 224 are two corner posts at one of the short sides of the base 230. Further, the two vertical corner posts 220 comprising the pair of irrigation drains 224 are the two vertical corner posts 220 being closest to the cart station 100 upon the moveable cart 200 being docked to the cart station 100. According to this specific embodiment each of the plurality of shelves 210 comprises a pair of drain openings 212 connecting the respective shelf 210 to the pair of irrigation drains 224.

Below the cart station 100 will be discussed in more detail. As mentioned above, the cart station 100 is configured to host a moveable cart 200. The cart station 100 is stationary arranged. The cart station 100 comprises a lighting system 110, an irrigation system 120, a ventilation system 130, and a station spine 102. Upon being installed for use, the station spine 102 is extending in the vertically direction, V, upwards from ground. Hence, the station spine 102 is a long-stretched structure. The station spine 102 is configured to support the lighting system 110, the irrigation system 120 and the ventilation system 130.

The lighting system 110, the irrigation system 120 and/or the ventilation system 130 may be controlled by a controller of the cart station 100. The controller may be a controller dedicated to control a single cart station 100. However, preferably, the controller is configured to control a plurality of cart stations 100. The controller may be embodied as circuitry. The circuitry of the controller may comprise a processor configured to execute program code for performing at least part of the controlling functionality of the controller. Alternatively, or in combination, the circuitry of the controller circuitry may comprise circuits dedicated to perform at least part of the controlling functionality of the controller. Hence, functions and operations of the controller may be implemented in software, dedicated hardware or firmware, or some combination of hardware, firmware and/or software.

The lighting system 110 is configured to illuminate the plants to be cultivated with light. Especially, the lighting system 110 is configured to illuminate each level, i.e. shelf 210, of a moveable cart 200, upon the moveable cart 200 is docked to the cart station 100, with light. The lighting system 110 may be controlled via the controller of the cart station 100. The lighting system 110 may be controlled by switching it on/off. Moreover, intensity, spectral content and/or color temperature of light emitted by the lighting system 110 may be controlled.

The lighting system 110 comprises a plurality of light frames 112. Each light frame 112 is extending in a horizontal direction, H, out from the station spine 102. The horizontal direction, H, being perpendicular to the vertically direction, V. Hence, the light frames 112 are extending perpendicularly outwards from the station spine 102. The light frames 112 supports light emitters. The light emitters may be distributed over two or more light bars 114 extending in the horizontal direction, H. The two or more light bars 114 having a length corresponding to a length of the moveable cart 200. In this context, a length corresponding to a length of the moveable cart 200 is meant a length that is 90-100% of the length of the long sides of the moveable cart 200. The plurality of light frames 112 are arranged along the station spine 102 to provide illumination for each of the plurality of shelves 210 of a moveable cart 200 upon the moveable cart 200 being hosted by the cart station 100. Hence, a number of levels of shelves 210 of the moveable cart 200 typically correspond to a number of light frames 112 of the cart station 100. A distance between two neighboring light frames 112 typically corresponds to the vertical spacing, Vₛ, between the levels, i.e. the shelves 210, of the moveable cart 200 being configured to be docked to the cart station 100.

The irrigation system 120 is configured to provide the plants to be cultivated with water. Especially, irrigation system 120 is configured to provide each level, i.e. shelf 210, of a moveable cart 200, upon the moveable cart 200 is docked to the cart station 100, with water. The irrigation system 120 comprises a plurality of irrigation nozzles 122. The plurality of irrigation nozzles 122 are arranged along the station spine 102 to provide irrigation for each of the plurality of shelves 210 of a moveable cart 200 upon the moveable cart 200 being hosted by the cart station 100. A distance between two neighboring irrigation nozzles 122 typically corresponds to the vertical spacing, Vₛ, between the levels, i.e. the shelves 210, of the moveable cart 200 being configured to be docked to the cart station 100.

Each irrigation nozzle 122 may comprise a pressure valve configured to close upon a water pressure is below a threshold pressure. Such a threshold pressure may be 1 bar. By this it is safeguarded that all shelves 210 of the moveable cart 200 are irrigated.

Each irrigation nozzle 122 may comprise a nozzle opening. The nozzle openings are preferably facing ground, i.e. having a mouth piece directed towards ground. The irrigation nozzles 122 are extending out from the station spine 102 in the horizontal direction, H. This so that a respective nozzle opening of the irrigation nozzles 122 is extending over a respective shelf 210 of a moveable cart 200 upon the moveable cart 200 being hosted by the cart station 100. The nozzle openings of the irrigation nozzles 122 typically has an extension of one to three decimeters in a direction perpendicular to the extension of the irrigation nozzles 122 out from the station spine 102. Further, a front of the irrigation nozzles 122 is typically flat. The shape of the irrigation nozzles 122 allow them to position the trays arranged on the shelves 210 so that a gap between a shelf wall and the tray arranged on the shelf is provided.

The irrigation system 120 is typically connected to a water supply line 128. The water supply line 128 typically supply water to a plurality of irrigation systems 120 of a plurality of cart stations 100. The irrigation system 120 of a specific cart station 100 may comprise a manual shut-off valve 126. The irrigation system 120 of a specific cart station 100 may comprise irrigation valve 124. The irrigation valve 124 may be controlled by the controller of the cart station 100.

The ventilation system 130 is configured to safeguard so that microclimates at the different levels, i.e. shelves 210, of the moveable cart 200 is prevented. This will allow for increase in growth and output in the cultivating system. This since uniform temperature, humidity and CO₂ levels are provided for throughout the levels, i.e. shelves 210, or the moveable cart 200. Especially, the ventilation system 130 is configured to provide an airflow at each level, i.e. shelf 210, of a moveable cart 200, upon the moveable cart 200 is docked to the cart station 100. The airflow at each level having a common origin via a common feed of air. The ventilation system 130 comprises a plurality of air flow outlets 132. The plurality of air flow outlets 132 are arranged along the station spine 102 to provide an air flow for each of the plurality of shelves 120 of a moveable cart 200 upon the moveable cart 200 being hosted by the cart station 100. A distance between two neighboring air flow outlets 132 typically corresponds to the vertical spacing, Vₛ, between the levels, i.e. the shelves 210, of the moveable cart 200 being configured to be docked to the cart station 100.

The station spine 102 may form a feeder channel 138 for the ventilation system 130. Especially a vertical cavity 104 through the station spine 102 may constitute the feeder channel 138 of the ventilation system 130. The feeder channel 138 may be connected to a duct work configured to supply air to a plurality of cart stations 100. Alternatively, or in combination, the feeder channel 138 may be connected to a fan configured to force air into the feeder channel 138. Such a fan may be controlled by the controller of the cart station 100. Alternatively, or in combination, the ventilation system 130 may comprise a ventilation valve. Such a ventilation valve may be controlled by the controller of the cart station 100.

The air flow outlets 132 may comprise slits in the station spine 102. The air flow outlets 132 may comprise air nozzles. Using air nozzles may allow to direct the outgoing air in a desired direction. A distance between two neighboring air flow outlets 132 typically corresponds to the vertical spacing, Vₛ, between the levels, i.e. the shelves 210, of the moveable cart 200 being configured to be docked to the cart station 100.

The ventilation system 130 may comprise a plurality of air flow arms 134. Each air flow arm 134 comprising a plurality of air flow openings 136 forming air flow outlets 132. Each air flow arm 134 is forming part of a respective one of the light frames 112 of the lighting system 110. Hence, the air flow arms 134 are supported by the light frames 112. Each air flow arm 134 extends in the horizontal direction, H, out from the station spine 102. The air flow arms 134 having a length corresponding to a length of the moveable cart 200. In this context, a length corresponding to a length of the moveable cart 200 is meant a length that is 75-100% of the length of the long sides of the moveable cart 200. The air flow arms 134 are centrally arranged in a corresponding light frame 112. Each air flow arm 134, at an end portion 133 thereof, is connected to the station spine 102. Such a connection to the station spine 102 is formed such that air from the feeder channel 138 of the station spine 102 is allowed to flow from the feeder channel 138 into the air flow arm 134. Hence, each air flow arm 134 is hollow and forms a channel for distributing air to the air flow openings 136 of the air flow arm 134. Further, the connection of the air flow arm 134 to the station spine 102 may be formed so that the light frame 112 is rotatably connected to the station spine 102. This allow for angle adjustment of the light frame.

The person skilled in the art realizes that the present invention by no means is limited to what is explicitly described above. On the contrary, many modifications and variations are possible within the scope of the appended claims.

For example, the cart station 100 may comprise a return gutter 108. The return gutter 108 being placed such that upon the moveable cart 200 being docked to the cart station 100, the irrigation drain(s) 224 of the moveable cart 200 is aligned with the return gutter 108 so that water being drained through the irrigation drain(s) 224 is ejected into the return gutter 108. The return gutter 108 may be connected to a main drain for diversion of excess water from the cultivation system 10. Alternatively, or in combination, the return gutter 108 may be connected to a filtration system. Water being treated by the filtration system may be reused in the cultivation system 10.

Moreover, the cart station 100 may comprise a cart sensor 106. The cart sensor 106 being configured to sense whether a moveable cart 200 is hosted at the cart station 100. Upon a moveable cart 200 is hosted at the cart station 100, the lighting system 110, the irrigation system 120 and the ventilation system 130 may be enabled. Enabling of the lighting system 110, the irrigation system 120 and the ventilation system 130 may be controlled by the controller of the cart station 100.

Additionally, variations can be understood and effected by the skilled person in practicing the claimed invention, from a study of the drawings, the disclosure, and the appended claims.

## Claims

1. A cart station (100) of a cultivation system (10) for cultivating plants, the cart station (100) being configured to host a moveable cart (200) comprising a plurality of shelves (210) for supporting trays with plants to be cultivated, the cart station (100) comprising:
a lighting system (110);
an irrigation system (120);
a ventilation system (130); and
a station spine (102) extending in a vertical direction (V) upwards from ground, the station spine (102) supporting the lighting system (110), the irrigation system (120) and the ventilation system (130),
wherein the lighting system (110) comprises a plurality of light frames (112), each light frame (122) extends in a horizontal direction (H) out from the station spine (102) and supports light emitters, wherein the plurality of light frames (112) are arranged along the station spine (102) to provide illumination for each of the plurality of shelves (210) of a moveable cart (200) upon the moveable cart (200) being hosted by the cart station (100),
wherein the irrigation system (120) comprises a plurality of irrigation nozzles (122), wherein the plurality of irrigation nozzles (122) are arranged along the station spine (102) to provide irrigation for each of the plurality of shelves (210) of a moveable cart (200) upon the moveable cart (200) being hosted by the cart station (100),
wherein the ventilation system (130) comprising a plurality of air flow outlets (132), wherein the plurality of air flow outlets (132) are arranged along the station spine (102) to provide an air flow for each of the plurality of shelves (120) of a moveable cart (200) upon the moveable cart (200) being hosted by the cart station (100).

2. The cart station (100) according to claim 1, wherein the ventilation system (130) comprises a plurality of air flow arms (134), wherein each air flow arm (134) comprises a plurality of air flow openings (136) forming air flow outlets (132), wherein each air flow arm (134) is forming part of a respective one of the light frames (112) of the lighting system (110), wherein each air flow arm (134) extend in the horizontal direction (H) out from the station spine (102).

3. The cart station (100) according to claim 1 or 2, wherein the station spine (102) is hollow forming a vertical cavity (104) through the station spine (102), wherein the vertical cavity (104) constitutes a feeder channel (138) of the ventilation system (130).

4. The cart station (100) according to claim 3, wherein the air flow outlets (132) comprises slits in the station spine (102).

5. The cart station (100) according to claim 2 and 3, wherein each air flow arm (134) is centrally arranged in each light frame (112) and wherein the air flow arm (134), at an end portion (133) thereof, is connected to the station spine (102).

6. The cart station (100) according to any one of claims 1-5, wherein each irrigation nozzle (122) comprises a pressure valve configured to close upon a water pressure being below a threshold pressure.

7. The cart station (100) according to any one of claims 1-6, further comprising a cart sensor (106) configured to sense whether a moveable cart (200) is hosted at the cart station (100), and upon a moveable cart (200) is hosted at the cart station (100), enable lighting, irrigation and ventilation.

8. The cart station (100) according to any one of claims 1-7, wherein each irrigation nozzle comprises a nozzle opening facing ground and wherein the irrigation nozzles (122) are extending out from the station spine in the horizontal direction (H) such that a respective nozzle opening of the irrigation nozzles (122) is extending over a respective shelf (210) of a moveable cart (200) upon the moveable cart (200) being hosted by the cart station (100).

9. A cultivation system (10) for cultivating plants, the cultivation system (10) comprising:
a cart station (100) according to any one of claims 1-8; and
a moveable cart (200) comprising a plurality of shelves (210) for supporting trays with plants to be cultivated.

10. The cultivation system (10) according to claim 9, wherein the moveable cart (200) further comprises:
four vertical corner posts (220) supporting the plurality of shelves (210); and
a base (230) supporting the four vertical corner posts (220),
wherein at least one of the four vertical corner posts (220) are hollow forming a vertical cavity (222) through the vertical corner post, wherein the vertical cavity (222) constitutes an irrigation drain (224),
wherein each of the plurality of shelves (210) comprises a drain opening (212) connecting the respective shelf (210) to the irrigation drain (224),
wherein the drain openings (212) are arranged at a bottom of the respective shelf (210),
wherein each drain opening (212) has a first width (w1) at a top portion thereof and a second width (w2) at a bottom portion thereof, wherein the second width (w2) is larger than the first width (w1).

11. The cultivation system (10) according to claim 10,
wherein two of the four vertical corner posts (220) are hollow forming a respective vertical cavity (222) through the respective vertical corner post (220), wherein the two vertical cavities (222) constitute a pair of irrigation drains (224),
wherein each of the plurality of shelves (210) comprises a pair of drain openings (212) connecting the respective shelf (210) to the pair of irrigation drains (224).

12. The cultivation system (10) according to claim 10 or 11, wherein each drain opening (212) has a triangular shape or an L-shape.

13. A moveable cart (200) of a cultivation system (10) for cultivating plants, the moveable cart (200) comprising:
a plurality of shelves (210) for supporting trays with plants to be cultivated;
four vertical corner posts (220) supporting the plurality of shelves (210); and
a base (230) supporting the four vertical corner posts (220),
wherein at least one of the four vertical corner posts (220) is hollow forming a vertical cavity (222) through the vertical corner post, wherein the vertical cavity (222) constitutes an irrigation drain (224),
wherein each of the plurality of shelves (210) comprises a drain opening (212) connecting the respective shelf (210) to the irrigation drain (224),
wherein the drain openings (212) are arranged at a bottom of the respective shelf (210),
wherein each drain opening (212) has a first width (w1) at a top portion thereof and a second width (w2) at a bottom portion thereof, wherein the second width (w2) is larger than the first width (w1).

14. The moveable cart according to claim 13,
wherein two of the four vertical corner posts (220) are hollow forming a respective vertical cavity (222) through the respective vertical corner post (220), wherein the two vertical cavities (222) constitute a pair of irrigation drains (224),
wherein each of the plurality of shelves (210) comprises a pair of drain openings (212) connecting the respective shelf (210) to the pair of irrigation drains (224).

15. The moveable cart according to claim 13 or 14, wherein each drain opening (212) has a triangular shape or an L-shape.
